# EUROPEAN PATENT APPLICATION

(11) **EP 2 953 223 A1**
(43) Date of publication of application: **09.12.2015**
(21) Application number: 14170933.7
(22) Date of filing: 03.06.2014
(51) Int. Cl.: H02G 3/32

(54) **Fastening system**

(71) Applicant: Airbus Operations GmbH, 21129 Hamburg (DE)
(72) Inventor: Goehlich, Robert Alexander, 21129 Hamburg (DE)
(74) Representative: Maiwald Patentanwalts GmbH

(57) **Abstract**

The present invention relates to a fastening system 10, a fastening assembly 1, an aerospace vehicle 100 with such fastening system 10 and a method for fastening components 40. The fastening system 10 comprises a mounting member 11 configured to be laminated to a structural element 20, and a holding member 12 configured to be inserted into the mounting member 11 and to hold at least one component 40 to be fastened to the structural element 20. The fastening assembly 1 comprises the structural element 20, the mounting member 11 laminated to the structural element 20, and the holding member 12 inserted into the mounting member 11 and configured to be to hold at least one component 40 to be fastened to the structural element 20. The method for fastening components 40 comprises the steps of providing a structural element 20, laminating a mounting member 11 to the structural element 20, and inserting a holding member 12 into the mounting member 11. The holding member 12 is configured to hold at least one component 40 to be fastened to the structural element 20.

## Description

The present invention relates to a fastening system, a fastening assembly, an aerospace vehicle with such fastening system and a method for fastening components.

In an aircraft, components such as electrical and/or mechanical supply lines or the like must be fastened to structural elements of the aircraft. For example, so-called stringers or frames of a fuselage of the aircraft are referred to as structural elements. In this case, the stringers extend substantially in the longitudinal direction of the fuselage, whereas the frames extend transverse to the stringers. Conventionally, the stringers and the frames consist of aluminum or fibre-reinforced plastics materials. It is known that the components to be fastened are fastened to the structural elements by means of retainers. For this purpose, the structural elements are spot-drilled at corresponding positions and retainers are subsequently fastened by means of rivets in the holes which have been produced. The loads produced by the components are introduced into the aircraft fuselage by means of the retainers. The insertion of holes into the structural elements does however involve an enormous amount of work and cleaning.

The retainer can also be glued to the structural element instead of riveted. In this alternative fastening method, it has however proved disadvantageous that in order to be able to transmit the same loads from the retainer to the structural element as in the rivet connection, a high-strength adhesive system must be used. This typically results in long curing times during the placement of the retainer and fixing during curing are required. Furthermore, in order to avoid problems of quality in the adhesive joint, this joint is in general considerably oversized. Time-consuming and costly cleaning and preparation of the adhesive region is also necessary in order to ensure the desired quality of the adhesive region. This is understandably worth avoiding.

Hence, there may be need to provide an economically improved fastening system.

The object of the present invention is solved by the subject-matters of the independent claims, wherein further embodiments are incorporated in the dependent claims. It should be noted that the following described aspects of the invention apply also for the fastening system, the fastening assembly, the aerospace vehicle with such fastening system and the method for fastening components.

According to the present invention, a fastening system is presented. The fastening system comprises a mounting member configured to be laminated to a structural element. The fastening system further comprises a holding member configured to be inserted into the mounting member and to hold at least one component to be fastened to the structural element.

In an example, the structural element is a stringer, a frame, a coupling or the like. In an example, the mounting member is a rectangular, square, oval or round piece of fabric or sheet laminated to the structural element to provide a passage for the holding member. In other words, the mounting member is laminated to the structural element in a curved or angled form to build a recess which is to be traversed by the holding member. The recess can be formed and hold open by the rigidity of the holding member's material.

In an example, the mounting member and/or the holding member is a loop shaped member. In an example, the mounting member acts as fixing point for the holding member. In an example, the holding member is a cable tie inserted into the mounting member. Such holding member can be very easily attached directly to the mounting member mounted to the structural element.

In an example, the component to be fastened is one or more of a cable, a wiring, a fiber optics, a data link, a piping and/or combinations thereof. In an example, the cable tie as the holding member is inserted into the mounting member and holds a cable. The cable is then fastened to the stringer as the structural element. The fastening is not direct, but indirect.

The fastening system according to the invention allows a considerable workload and work complexity reduction during assembly, in particular during MCA (major component assembly) and FAL (final assembly line). Further, the lead time and the noise are reduced and the occurrence of dust is eliminated. A modular assembly, unification and standardization are enabled. There is no need for surface preparation and no limitations in durability and implementations. Similar, also maintenance and disassembly is made easier and faster. Further, components can be mounted without the need of surface preparation. Rivets can be omitted. Still further, by providing the fastening system, mounting of components is also possible in areas where the provision of glue is not possible, or only possible with restrictions, such as within fuel tanks.

In an example, the structural element comprises a plurality of laminated prepreg layers. In an example, the structural element comprises a laminated skin and the mounting member is configured to be laminated to said skin.

In an example, there can be one, two or more mounting members laminated to the structural element to provide a row of passages for one or more holding members. The recesses formed by each of the mounting members can, but need not to be of equal size and shape.

In an example, the mounting member has a width between 0.5 and 100 cm, preferably between 2 and 20 cm. In an example, the recess formed by the mounting member has a width between 2 and 200 mm, preferably between 5 and 10 mm. In an example, the holding member has a width between 0.5 and 20 mm, preferably between 1 and 10 mm.

In an example, the mounting member and/or the holding member are made from plastic materials, compound materials, hybrid materials, fibre reinforced materials, preferably carbon fiber reinforced plastic or the like.

In an example, the mounting member is not laminated, but glued or other wisely attached to the structural element.

In an example, the holding member comprises a foot to be inserted into the mounting member and an openable bracket to hold the component to be fastened. The bracket may have a scissors design. The bracket may be self-locking, when the component to be fastened is inserted into the bracket.

In an example, the fastening system further comprises an adapter configured to be arranged between the mounting member and the component to be fastened. The adapter thereby enables a minimum distance between the component to be fastened and the structural element, which is favorable to, e.g., balance different shapes, sizes, materials, potentials and the like, to balance unevenness of the structural element's surface, or to protect the mounting member, the skin and/or the structural element from the temperature of the component to be fastened or vice versa.

In an example, the mounting member and the holding member are formed integral, which means they are one part.

According to the present invention, also a fastening assembly is presented. The fastening assembly comprises a structural element, a mounting member laminated to the structural element, and a holding member inserted into the mounting member and configured to be to hold at least one component to be fastened to the structural element.

According to the present invention, also an aerospace vehicle with such fastening system is presented. The aerospace vehicle may be an aircraft, as an airplane, a helicopter, an airship, a drone or a balloon. The aerospace vehicle may also be a spacecraft, as a carrier rocket, a booster, a spaceship, a module of a space station or a satellite. The application of the fastening system as described above for aerospace vehicles provides the advantage that the manufacturing procedure of the aerospace vehicles is facilitated.

According to the present invention, also a method for fastening components is presented. The method for fastening components comprises the following steps, not necessarily in this order:
a) Providing a structural element.
b) Laminating a mounting member to the structural element.
c) Inserting a holding member into the mounting member.

The holding member is configured to hold at least one component to be fastened to the structural element.

In an example, the mounting member is laminated to the skin of the structural element in a single step.

In another example, for laminating, a supporting block is laid between the structural element and the mounting member. The supporting block helps to build the recess or passage for the holding member and is removed after manufacture.

In an example, the method further comprises a step of curing the mounting member, the supporting block, the skin and/or the structural element in an autoclave after the laminating.

In an example, the mounting member, the skin and/or the structural element are at least partially covered by a peel ply, a perforated release film, a ply absorber, a release film, a breather fabric and/or the like.

According to the present invention, the method for fastening components enables a shorter time frame for assembly. Further, components can be mounted without the need of surface preparation. Rivets can be omitted. A dust-free assembly is possible. Still further, by providing the fastening system, mounting of components is also possible in areas where the provision of glue is not possible, or only possible with restrictions, such as within fuel tanks.

It has to be noted that embodiments of the invention are described with reference to different subject matters, e.g., devices, systems, and methods. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

These and other aspects of the present invention will become apparent from and be elucidated with reference to the embodiments described hereinafter.
- **Fig. 1**: shows schematically and exemplarily an embodiment of a mounting member laminated to a structural element.
- **Fig. 2**: shows schematically and exemplarily an embodiment of a fastening assembly with a fastening system and a structural element.
- **Fig. 3**: shows schematically and exemplarily an embodiment of a fastening system with a holding member inserted into a mounting member and holding a component to be fastened.
- **Fig. 4**: shows schematically and exemplarily a further embodiment of a fastening system with the holding member inserted into the mounting member and holding a component to be fastened.
- **Fig. 5**: shows schematically and exemplarily a further embodiment of a fastening system.
- **Fig. 6**: shows basic steps of an example of a method for fastening components.
- **Fig. 7**: shows one step of an example of a method for fastening components.
- **Fig. 8**: shows a schematic overview of an example of an aerospace vehicle comprising a structural element and a fastening system.
- **Fig. 9**: shows a schematic overview of an example of another aerospace vehicle comprising a structural element and a fastening system.

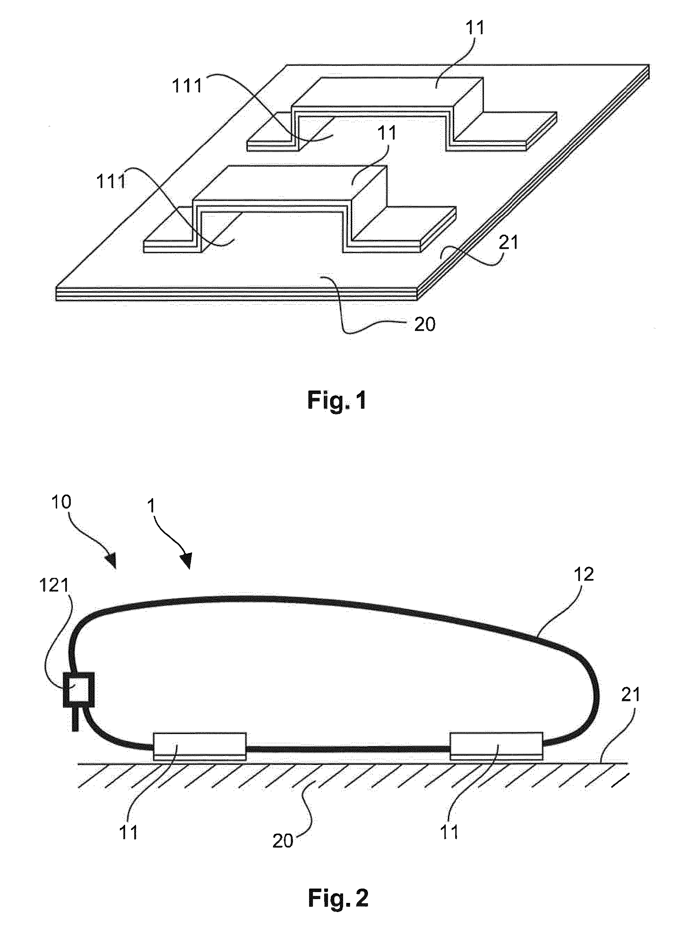

**Fig. 1** shows schematically and exemplarily an embodiment of a mounting member 11 laminated to a structural element 20. The structural element 20 can be a stringer, a frame, a coupling or the like. The structural element 20 comprises a plurality of laminated prepreg layers and a laminated skin 21

The mounting member 11 is laminated to the skin 21. The mounting member 11 is a rectangular piece of fabric attached to the structural element 20 to provide a passage for a holding member 12 (see Fig. 2). The mounting member 11 is laminated to the structural element 20 in an angled form to build a recess 111 which is to be traversed by the holding member 12. The recess 111 is formed by two sidewalls and a top wall of the mounting member 11. The recess 111 is held open by the rigidity of the holding member's material.

In this example, two mounting members 11 are used to provide a row of two passages for the holding member 12. The two recesses 111 formed by the two mounting members 11 are here of equal size and shape.

**Fig. 2** shows schematically and exemplarily an embodiment of a fastening assembly 1. The fastening assembly 1 comprises a structural element 20 and the fastening system 10. The fastening system 10 comprises the mounting member 11 laminated to the structural element 20 and the holding member 12 inserted into the mounting member 11. The holding member 12 is configured to hold at least one component 40 to be fastened to the structural element 20, as will be shown in the following Figures.

The holding member 12 is a loop shaped member, in particular a cable tie inserted into the mounting member 11. The holding member 12 comprises a closure mechanism 121. The holding member 12 can be very easily attached directly to the mounting member 11 mounted to the structural element 20. The mounting member 11 acts as fixing point for the holding member 12.

The mounting member 11 and the holding member 12 are here made from plastic materials, but can be also made from compound materials, fibre reinforced materials, and preferably carbon fiber reinforced plastic materials.

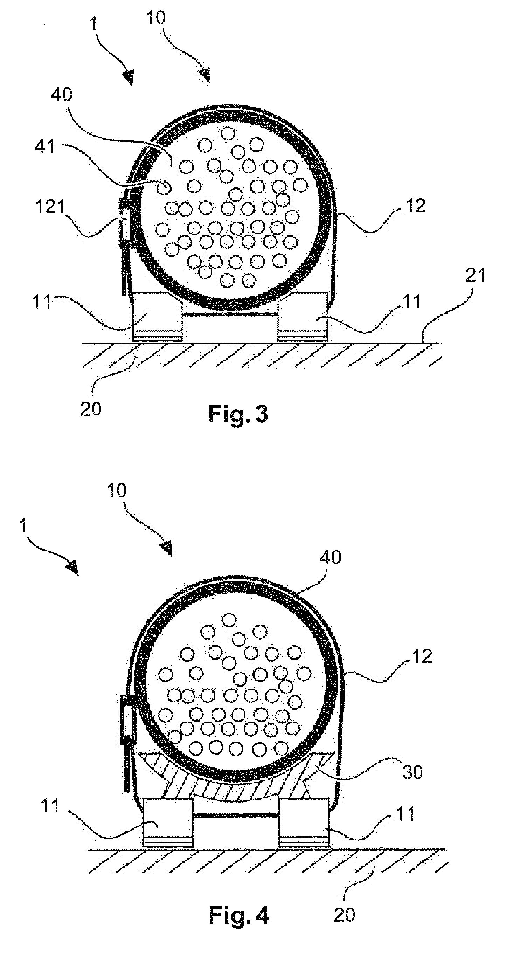

Fig. 3 shows schematically and exemplarily an embodiment of a fastening system 10 with the holding member 12 inserted into the mounting member 11 and holding a component 40 to be fastened. The component 40 to be fastened is here a fiber optics, but can also be one or more of a cable, a wiring, a data link, a piping and/or combinations thereof. The fiber optics comprising a plurality of fibres 41 is fastened indirectly be means of the holding member 12 and the mounting member 11 to the structural element 20.

The holding member 12 has to be pulled tight to hold the component 40 to be fastened safe and reliable.

**Fig. 4** shows schematically and exemplarily a further embodiment of a fastening system 10 with the holding member 12 inserted into the mounting member 11 and holding the component 40 to be fastened. The component 40 to be fastened is here again a fiber optics. In contrast to Fig. 3, an adapter 30 is used. The adapter 30 is arranged between the mounting member 11 and the component 40 to be fastened. The adapter 30 thereby enables a minimum distance between the component 40 to be fastened and the structural element 20.

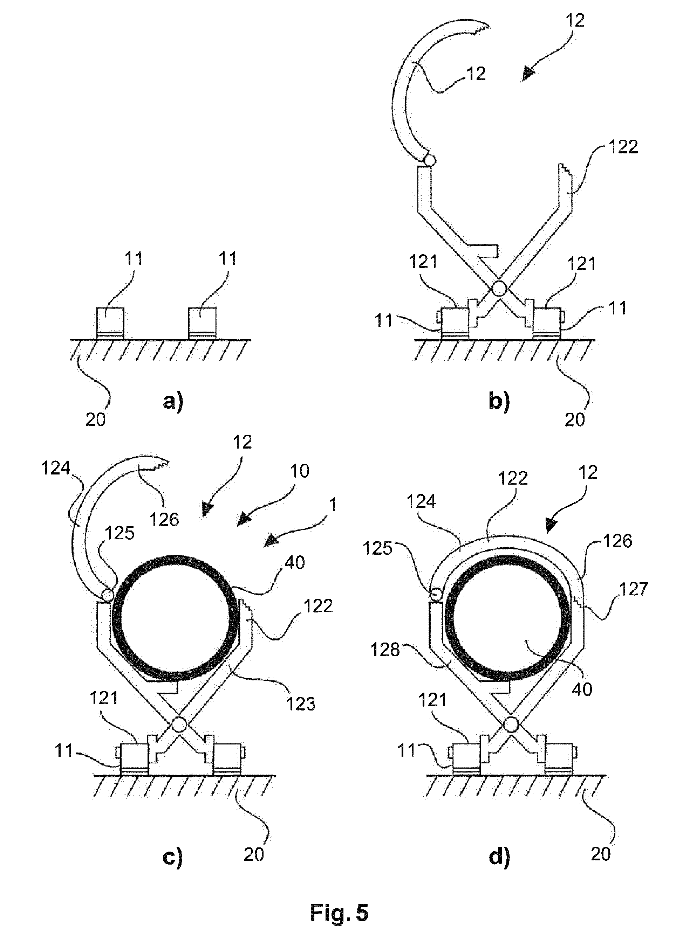

**Fig. 5** shows schematically and exemplarily a further embodiment of a fastening system 10. In **Fig. 5a**, two mounting members 11 are laminated to the structural element 20. In **Fig. 5b**, the holding member 12 is inserted into the two mounting members 11. The holding member 12 therefore comprises two feet 121, so that one foot 121 is inserted into each mounting member 11. The holding member 12 further comprises an openable bracket 122 to hold the component 40 to be fastened. The open bracket 122 with inserted component 40 to be fastened is shown in **Fig. 5c**. The bracket 122 comprises a base 123 and a pivotable cover 124 connected by a hinge 125. The bracket 122 has a scissors design. The component 40 to be fastened is here a piping. Scissors design means that the insertion of the piping in the bracket leads to a spreading of the feet 121 in the mounting members 11 and thereby secures the holding member 12 to the mounting members 11. In **Fig. 5d,** the bracket 122 is closed and surrounds and holds the component 40 to be fastened. The bracket 122 further comprises a support 128 to support the component 40 to be fastened. A free end 126 of the cover 124 opposite to the hinge 125 is provided with a clamping mechanism 127 to ensure a reliable closure of the bracket 122.

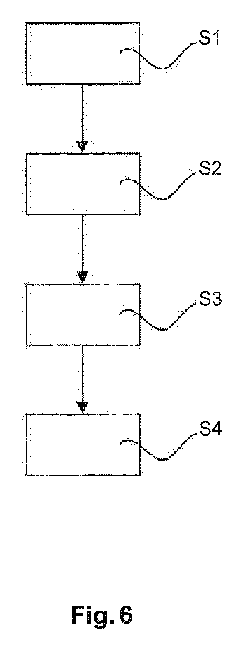

**Fig. 6** shows a schematic overview of steps of a method for fastening components 40. The method comprises the following steps, not necessarily in this order:
- In a first step S1, a structural element 20 is provided.
- In a second step S2, a mounting member 11 is laminated to the structural element 20.
- In a third step S3, a holding member 12 is inserted into the mounting member 11. The holding member 12 is configured to hold at least one component 40 to be fastened to the structural element 20.

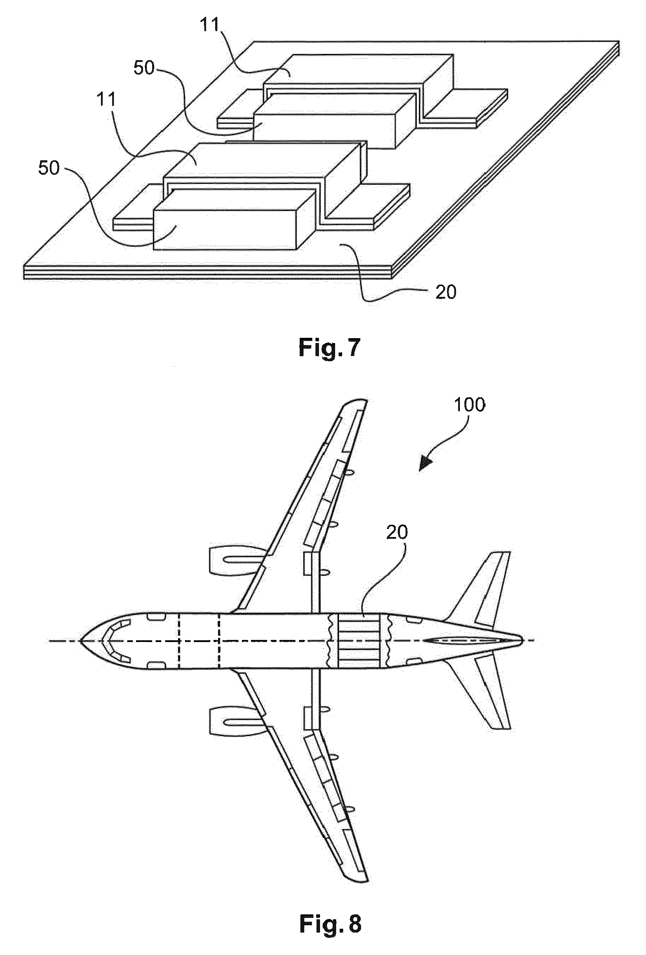

The mounting members 11 may be laminated to the skin 21 of the structural element 20 in a single step. As an alternative and as shown in **Fig. 7****,** for laminating, a supporting block 50 is laid between the structural element 20 and each mounting member 11. The supporting block 50 helps to build the recess or passage for the holding member 12 and is removed after manufacturing.

The method further comprises an optional step S4 (see Fig. 6) of curing the mounting member 11, the supporting block 50, the skin 21 and/or the structural element 20 in an autoclave after the laminating.

**Fig. 8** shows a schematic overview of an example of an aerospace vehicle 100 in form of an aircraft comprising a structural element 20 and the fastening system 10. The aerospace vehicle 100 is here an airplane, but can also be a spacecraft, a helicopter, an airship, a drone or a balloon.

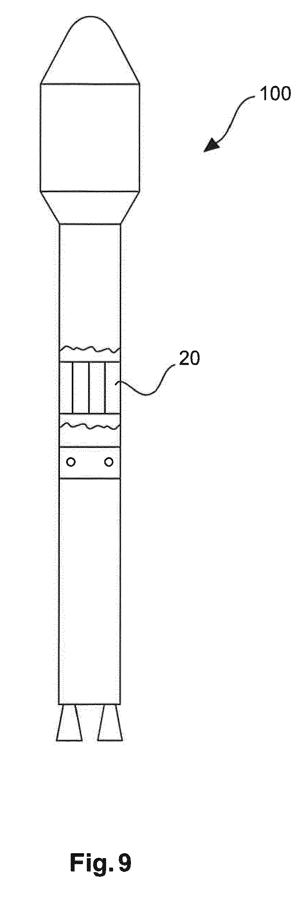

**Fig.** 9 shows a schematic overview of an example of a aerospace vehicle 100 in form of a spacecraft comprising a structural element 20 and the fastening system 10. The spacecraft 100 is here a carrier rocket, but can also be a booster, a spaceship, the module of a space station or a satellite.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A fastening system (10), comprising:
- a mounting member (11) configured to be laminated to a structural element (20), and
- a holding member (12) configured to be inserted into the mounting member (11) and to hold at least one component (40) to be fastened to the structural element (20).

2. Fastening system (10) according to claim 1, wherein the structural element comprises a plurality of prepreg layers.

3. Fastening system (10) according to claim 1 or 2, wherein the structural element (20) comprises a skin (21) and the mounting member (11) is configured to be laminated to the skin (21).

4. Fastening system (10) according to one of the preceding claims, wherein the structural element (20) is a stringer, a frame, a coupling or the like, and/or wherein the component (40) to be fastened is a cable, a wiring, a fiber optics, a data link, a piping and/or the like.

5. Fastening system (10) according to one of the preceding claims, wherein the mounting member (11) and/or the holding member (12) is a loop shaped member.

6. Fastening system (10) according to one of the preceding claims, wherein the holding member (12) is a cable tie.

7. Fastening system (10) according to one of the claims 1 to 5, wherein the holding member (12) comprises a foot (121) to be inserted into the mounting member (11) and an openable bracket (122) to hold the component (40) to be fastened.

8. Fastening system (10) according to one of the preceding claims, further comprising an adapter (30) configured to be arranged between the mounting member (11) and the component (40) to be fastened.

9. A fastening assembly (1), comprising:
- a structural element (20),
- a mounting member (11) laminated to the structural element (20), and
- a holding member (12) inserted into the mounting member (11) and configured to hold at least one component (40) to be fastened to the structural element (20).

10. An aerospace vehicle (100) comprising a structural element (20) and a fastening system (10) according to one of the claims 1 to 8.

11. A method for fastening components, comprising the following steps:
- providing a structural element (20),
- laminating a mounting member (11) to the structural element (20), and
- inserting a holding member (12) into the mounting member (11),
wherein the holding member (12) is configured to hold at least one component (40) to be fastened to the structural element (20).

12. Method according to the preceding claim, wherein the mounting member (11) is laminated to a skin (21) of the structural element (20) in a single step.

13. Method according to the preceding claims, wherein for laminating, a supporting block (50) is laid between the structural element (20) and the mounting member (11).

14. Method according to the preceding claims, further comprising the step of curing the mounting member (11) and the structural element (20) in an autoclave after the laminating.

15. Method according to the preceding claims, wherein the mounting member (11) and the structural element (20) are at least partially covered by a peel ply, a perforated release film, a ply absorber, a release film, a breather fabric and/or the like.
